# EUROPÄISCHE PATENTSCHRIFT

(11) **EP 0 941 899 B1**
(45) Veröffentlichungstag und Bekanntmachung des Hinweises auf die Patenterteilung: **01.10.2003**
(21) Anmeldenummer: 99103000.8
(22) Anmeldetag: 15.02.1999
(51) Int. Cl.: B60R 22/24

(54) **Sicherheitsgurtanordnung**
Safety belt device
Dispositif de ceinture de sécurité

(30) Priorität: 11.03.1998 DE 19810577
(43) Veröffentlichungstag der Anmeldung: 15.09.1999
(73) Patentinhaber: TAKATA-PETRI (Ulm) GmbH, 89081 Ulm (DE)
(72) Erfinder: Mautsch, Jürgen, 89250 Senden (DE); Krammel, Horst, 85139 Wettstetten (DE)
(74) Vertreter: Maikowski, Michael, Dipl.-Ing. Dr.

(56) Entgegenhaltungen:
- DE-A- 3 401 938
- FR-A- 2 524 326
- GB-A- 2 189 377
- US-A- 5 415 432
- US-A- 5 415 433
- US-A- 5 673 936

## Beschreibung

Die Erfindung betrifft eine Sicherheitsgurtanordnung nach dem Oberbegriff des Anspruchs 1. Eine solche Sicherheitsgurtanordnung ist aus der US-A-5,415,433 bekannt.

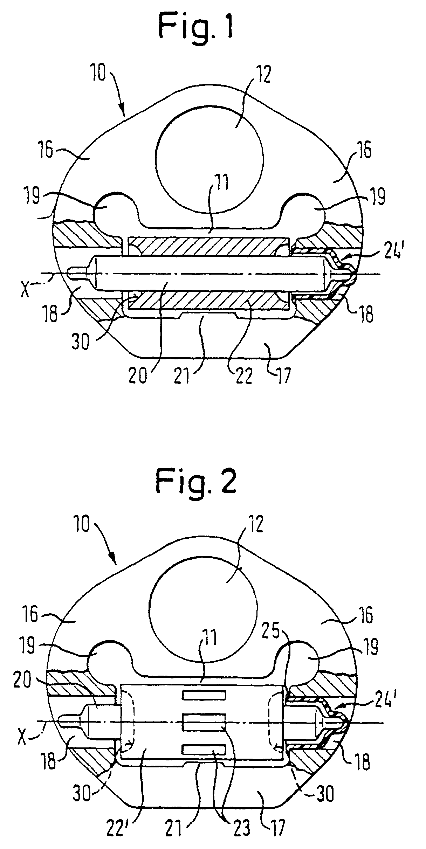

Grundsätzlich sind Rollenumlenkungen in verschiedenen Varianten bekannt. Derartige Sicherheitsgurtanordnungen werden bei Kraftfahrzeugen verwendet, um das von einer Gurtrolle abgewickelte Gurtband zum Fahrgast hin umzulenken. Fig. 1 zeigt eine Rollenumlenkung für einen Sicherheitsgurt, die eine in Draufsicht etwa ovale Halterung 10 aus Metall aufweist, in der eine grundsätzlich rechteckige und nach oben offene Aussparung 11 für eine Umlenkrolle 22 vorgesehen ist. Oberhalb der Aussparung 11 ist in der Halterung 10 mittig eine kreisförmige Öffnung 12 zur Befestigung der Halterung 10 an einem Fahrzeug vorgesehen. Eine Welle 20 ist zwischen zwei Lagern drehbar befestigt, um die Umlenkrolle 22 reibungsarm zu drehen, wenn das um die Umlenkrolle 22 geführte Gurtband bewegt wird, beispielsweise um den Sicherheitsgurt anzulegen.

Im angelegten Zustand dieser Sicherheitsgurtanordnung, das heißt wenn der Sicherheitsgurt von einem Fahrzeuginsassen angelegt worden ist, umschlingt der Sicherheitsgurt die Umlenkrolle 22 teilweise. Hierbei verläuft bei der in Fig. 1 dargestellten Situation ein Bandteil des Gurtbandes schräg zur Drehachse der Umlenkrolle 22 und ein andere Bandteil des Gurtbandes 14 verläuft rechtwinklig zur Drehachse der Umlenkrolle 22. Neben diesen Situation können jedoch auch im angelegten Zustand beide Bandteile des Gurtbandes 14 schräg zur Drehachse der Umlenkrolle 22 verlaufen.

Die Erfinder der vorliegenden Anmeldung haben erkannt, daß bei einer Sicherheitsgurtanordnung, wie sie in Fig. 1 gezeigt ist, bei erhöhten Gurtkräften das Gurtband 14 nicht mehr ordnungsgemäß über die Umlenkrolle 22 geführt wird, sondern aufgrund der vorhandenen Verschränkung zwischen den beiden Gurtbandteilen seitlich transportiert wird. Dies kann zur Folge haben, daß die resultierende Kraft des Gurtbandes 14 aus der Drehachse der Halterung 10 herausläuft, so daß der Umlenkbeschlag eine ungewünschte und schlagartige Bewegung vollzieht. Hierbei kann das Gurtband vollständig in eine Ecke der Umlenkung gezogen werden, was den ordnungsgemäßen Betrieb der Sicherheitsgurtanordnung beeinträchtigen kann, insbesondere wenn zusätzliche Sicherheitseinrichtungen wie Gurtstraffer vorgesehen sind.

Aus der GB-A-2,189,377 ist ein Umlenkbeschlag für Sicherheitsgurte bekannt, bei dem durch die Verwendung einer reibungsarmen Welle im Gebrauch nur kleine Reibungswiderstände auftreten sollen, wobei jedoch im Belastungsfall Stützflächen zur Verfügung stehen, welche die entstandenen Kräfte aufnehmen.

Es ist das der Erfindung zugrundeliegende Problem (Aufgabe), eine Sicherheitsgurtanordnung der eingangs genannten Art zu schaffen, bei der bei durch Einsatz eines Gurtstraffers auftretenden erhöhten Gurtkräften ein ordnungsgemäßes Umlenken des Gurtbandes um die Umlenkrolle gewährleistet ist.

Die Lösung dieser Aufgabe erfolgt durch die Merkmale des Anspruchs 1.

Durch die erfindungsgemäß vorgesehene Bremseinrichtung wird die Umlenkrolle bei erhöhten Gurtkräften gebremst bzw. vollständig blockiert, wodurch ein seitlicher Transport des Gurtbandes auf der Umlenkrolle vermieden ist. Da ein verschränktes Gurtband, das über eine Umlenkrolle geführt ist, bei Aufbringen einer Zugkraft nur dann seitlich transportiert wird, wenn sehr hohe Gurtkräfte vorliegen und wenn sich die Umlenkrolle drehen kann, verhindert die erfindungsgemäß vorgesehene Bremseinrichtung auf wirksame Weise einen unerwünschten seitlichen Transport des Gurtbandes. Bevorzugt tritt die Bremseinrichtung bei nachlassenden Gurtkräften wieder außer Eingriff, so daß sich in diesem Fall die Umlenkrolle wieder leichtgängig drehen kann.

Vorteilhafte Ausführungsformen der Erfindung sind in der Beschreibung, den Zeichnungen, sowie den Unteransprüchen beschrieben.

Die erfindungsgemäße Sicherheitsgurtanordnung weist zumindest ein, bevorzugt zwei federnd ausgebildete Lager auf, wodurch sichergestellt ist, daß auf den Sicherheitsgurt - und damit auch auf die Umlenkrolle bzw. die Lager - ausgeübte Kräfte zunächst durch das federnd ausgebildete Lager aufgenommen werden. Bei Auftreten großer Kräfte verformt sich das Lager soweit elastisch, daß die Umlenkrolle gegen einen Anschlag oder dergleichen gedrückt wird, so daß die Drehbewegung der Umlenkrolle gebremst bzw. angehalten wird. Anschließend kann das Gurtband über die gebremste Umlenkrolle gleiten, ohne daß im Bereich der Umlenkrolle ein Querbewegung auftritt.

Nach einer weiteren vorteilhaften Ausführungsform kann das Lager eine hülsenartige Form aufweisen und an einem Ende offen und einem gegenüberliegenden Ende geschlossen sein, wodurch eine einfache Herstellung möglich ist. Das Lager kann durch ein Spritzguß- oder Extrusionsverfahren hergestellt werden.

Bei einer dritten bevorzugten Ausführungsform der Erfindung kann das Lager am Außenumfang des offenen Endes verbreitert sein, wodurch das Lager durch den verbreiterten Rand in einer Durchbrechung der Halterung sicher gehalten werden kann und ein Hineinrutschen des Lagers in die Durchbrechung ausgeschlossen ist.

Bei einer weiteren Ausführungsform kann das Lager an dem offenen Ende mehrere schlitzartig oder konische, in Axialrichtung verlaufende Ausnehmungen aufweisen, die vorzugsweise einander gegenüberliegend angeordnet sind. Dadurch ist das Lager am offenen Ende geringfügig komprimierbar und in Axialrichtung in eine Durchbrechung der Halterung eindrückbar, wodurch dessen Montage erleichtert ist.

Eine gute Federwirkung für eine Welle ergibt sich nach einer weiteren vorteilhaften Ausführungsform der Erfindung, wenn das Lager in eine Durchbrechung der Halterung eingebracht ist, die als Durchgangsbohrung ausgeführt ist. Das Lager besitzt in diesem Fall einen Freiraum, um in Axialrichtung zu federn.

Nach einer weiteren Ausbildung der Erfindung kann das Lager am geschlossenen Ende und im Inneren eine konvexe Lagerfläche aufweisen, die vorzugsweise an einer inneren Stirnseite konzentrisch angeordnet ist. Dadurch wird die Auflagefläche der Umlenkrolle bzw. deren Welle im Lager minimiert und durch die Punktberührung zwischen Wellenende und Lager können die Reibungskräfte erheblich verringert werden. Durch den damit verbundenen gering auftretenden Abrieb ist ferner eine hohe Lebensdauer des Lagers gewährleistet.

Nach einer bevorzugten Ausführungsform kann das Lager zylindrisch ausgebildet sein und zumindest zwei Bereiche mit unterschiedlichen Durchmessern aufweisen. Weiterhin kann das Lager auf der Seite des offenen Endes den größeren Durchmesser aufweisen und vorzugsweise nach etwa der Hälfte seiner Länge eine Verjüngung bilden. Auch kann das Lager zwischen den beiden Bereichen unterschiedlichen Durchmessers eine im Querschnitt mäanderförmige Ausbildung aufweisen, wobei durch diese spezielle Formgebung des Lagers eine gute Federwirkung erzielt wird. Hierbei kann sich die mäanderförmige Ausbildung zumindest teilweise innerhalb des Bereiches mit größerem Durchmesser erstrecken.

Vorteilhaft ist es, wenn das Lager mit der Außenfläche des Bereiches mit größerem Durchmesser an einer Wand der Durchbrechung der Halterung anliegt. Hierdurch ist eine gute Flächenberührung mit der Halterung möglich, wodurch eine hohe und gleichmäßige Kraftübertragung erfolgen kann.

Vorzugsweise kann das Lager aus einem Kunststoff, z.B. aus Polyoxymethylen bestehen, der bevorzugt eine Teflonverstärkung aufweist. Durch die hohe Kristallinität kann der Konstruktionswerkstoff Polyoxymethylen (POM) zu einem sehr harten, steifen, schlagzähen und abriebfesten Lager verarbeitet werden. Mit einer Glasfaserverstärkung lassen sich Festigkeit und Steifigkeit des Werkstoffes sowie durch Zulegierung von Elastomeren die Abriebfestigkeit weiter erhöhen.

Nach einer weiteren Ausführungsform der Erfindung kann die Umlenkrolle an ihren beiden Stirnseiten konkave oder abgestufte Ausnehmungen aufweisen. Dadurch wird dem verbreiterten Rand des Lagers, der etwas in Richtung der Stirnseiten der Umlenkrolle vorsteht, genügend freier Raum gegenübergestellt, so daß eine Berührung oder ein Schleifen zwischen dem verbreiterten Rand des Lagers und der Stirnseite der Umlenkrolle ausgeschlossen sind.

Bevorzugt kann die Umlenkrolle eine Welle aufweisen, die sich an ihren beiden Enden verjüngt und die einen vorzugsweise um etwa ein Drittel des ursprünglichen Durchmessers verkleinerten Fortsatz bildet. Dadurch ist die Leichtgängigkeit der Rollenumlenkung gewährleistet, da die Welle das Lager an den Seiten nur gering (punktförmig) berührt und somit geringste Reibung und nahezu kein Abrieb auftreten.

Um ein Ineingrifftreten der Bremseinrichtung zu ermöglichen, kann die Lagerwelle der Umlenkrolle flexibel ausgebildet sein. Hierdurch biegt sich die Lagerwelle bei hohen Zugkräften bzw. Gurtkräften etwas durch, so daß die Umlenkrolle mit dem vorgesehenen Vorsprung in Eingriff tritt, um die Bremswirkung zu erzielen.

Die Bremseinrichtung weist einen an der Halterung vorgesehenen Vorsprung auf, mit dem die Umlenkrolle in Eingriff tritt, nachdem diese durch die auftretenden Gurtkräfte in Richtung des Vorsprungs bewegt worden ist.

Besonders vorteilhaft ist, wenn die Bremseinrichtung zumindest eine an der Umlenkrolle vorgesehene Vertiefung aufweist. In diesem Fall kann der an der Halterung vorgesehene Vorsprung mit der Vertiefung oder den Vertiefungen bei Aktivierung der Bremseinrichtung in Eingriff treten, so daß die Umlenkrolle vollständig blockiert wird. Ein besonders sicherer Eingriff wird erzielt, wenn Vertiefung und Vorsprung im wesentlichen komplementär ausgebildet sind. Eine besonders rasche Aktivierung der Bremseinrichtung ist gewährleistet, wenn über den Umfang der Umlenkrolle mehrere Vertiefungen gleichmäßig verteilt angeordnet sind.

Da das zugrundeliegende Problem insbesondere bei solchen Sicherheitsgurtanordnungen auftritt, bei denen die Verschränkung zwischen den beiden Gurtbandteilen mindestens 30° beträgt, führt die vorliegende Erfindung bei einem solchen Gurtbandverlauf zu besonders guten Ergebnissen. Auch ist die Erfindung besonders vorteilhaft anwendbar, wenn der Umschlingungswinkel des Gurtbandes um die Umlenkrolle mindestens 90° beträgt.

Bevorzugt wird die Umlenkrolle bei nachlassender Gurtkraft reversibel wieder von der Bremseinrichtung wegbewegt.

Neben den dargestellten Ausführungsbeispielen ist es auch möglich, ein aktives Bremsen, beispielsweise durch ein Stellglied oder dergleichen, vorzusehen.

Nachfolgend wird die vorliegende Erfindung rein beispielhaft anhand vorteilhafter Ausführungsformen und unter Bezugnahme auf die beigefügten Zeichnungen beschrieben. Es zeigen:
- Fig. 1: eine teilweise geschnittene Darstellung einer Ausführungsform einer Sicherheitsgurtanordnung in Vorderansicht;
- Fig. 2: eine teilweise geschnittene Darstellung einer weiteren Ausführungsform einer Sicherheitsgurtanordnung in Vorderansicht;
- Fig. 3: einen Längsschnitt durch eine Umlenkrolle;
- Fig. 4: eine Seitenansicht einer Welle;
- Fig. 5: eine Ansicht auf die offene Stirnseite eines Lagers;
- Fig. 5a: eine Seitenansicht des Lagers von Fig. 5;
- Fig. 5b: einen Schnitt entlang der Schnittlinie A-A von Fig. 5;
- Fig. 6: eine geschnittene Seitenansicht einer weiteren Ausrührungsform eines Lagers; und
- Fig. 7: eine geschnittene Seitenansicht einer weiteren Ausführungsform eines Lagers.

Fig. 1 zeigt eine Sicherheitsgurtanordnung, die eine in Draufsicht etwa ovale Halterung 10 aus Metall aufweist, in der eine grundsätzlich rechtekkige und nach oben offene Aussparung 11 für eine zylindrische Umlenkrolle 22 vorgesehen ist. Oberhalb der Aussparung 11 ist in der Halterung 10 mittig eine kreisförmige Öffnung 12 zur Befestigung der Halterung 10 an einem Fahrzeug vorgesehen. In die Vorder- und Rückseite der Öffnung 12 ist jeweils ein Formteil aus Kunststoff einsetzbar, um eine Geräuschreduzierung bei einem Verschwenken der Halterung 10 zu erzielen.

Die Halterung 10 ist oberhalb der Aussparung 12 konvex ausgebildet, wobei sich seitlich der Öffnung 12 jeweils schenkelartige, nach außen gewölbte Ausformungen 16 nach unten erstrecken, die unterhalb der Aussparung in einem Steg 17 zusammenlaufen. Innerhalb der Aussparung 11 und im mittleren Bereich der Halterung 10 sind zwei kreiszylindrische Durchbrechungen in Form von Bohrungen 18 vorgesehen, die jeweils eine Ausformung 16 durchsetzen und koaxial zueinander sowie parallel zu dem Steg 17 verlaufen. Oberhalb der Bohrungen 18, die zur Aufnahme jeweils eines Lagers 24' dienen (in Fig. 2 ist nur das rechte Lager dargestellt), und rechtwinklig zu diesen verlaufend, sind in der Halterung 10 zwei kreisförmige Führungsöffnungen 19 vorgesehen, deren Ränder von der Mittelebene der Halterung 10 zur deren Vorder- und Rückseite konvex gekrümmt verlaufen und die sich zur Oberseite der Aussparung 11 hin öffnen. Diese Führungsöffnungen dienen zur reibungsarmen Führung des Gurtbandes, falls dieses schräg abgerollt oder aufgewickelt wird. Die beiden Lager 24' lagern zwischen sich eine Welle 20, die mit der Umlenkrolle 22 verbunden ist.

Zur Montage der Rollenumlenkung wird die Welle 20 von einer Seite der Halterung 10 in eine Bohrung 18 von dort und bis zu der gegenüberliegenden Bohrung 18 des anderen Schenkels 16 eingeführt, wobei vorher in der Aussparung 11 zwischen den beiden Schenkeln 16 die Umlenkrolle 22 eingesetzt worden ist, die nach Einsetzen der Welle 20 von dieser durchsetzt ist. Anschließend wird von jeder Seite der Halterung 10 ein Lager 24' in die Durchgangsbohrung 18 eingeführt und dort verrastet. Die Welle 20 greift nun mit ihren beiden Enden jeweils in ein Lager 24' und trägt die Umlenkrolle 22, die fest auf der Welle 20 verrastet ist. Durch die kreisförmige Öffnung 12 und die eingerasteten Formteile erfolgt die Montage der Halterung 10 an einem Fahrzeugteil, insbesondere einer B-Säule eines Kraftfahrzeuges.

Wie Fig. 1 ferner zeigt, ist etwa in der Mitte des Steges 17 ein Vorsprung 21 angeformt, der in Richtung der Umlenkrolle 22 weist und sich in Axialrichtung der Umlenkrolle 22 erstreckt. Bei einem normalen, das heißt belastungsfreien Abwickeln des Gurtbandes um die Umlenkrolle 22 tritt keine Berührung zwischen dem Vorsprung 21 und dem Außenumfang der zylindrischen Umlenkrolle 22 auf. Erhöht sich jedoch die Gurtkraft, das heißt die auf den Gurt aufgebrachte Zugkraft über einen bestimmten, voreingestellten Wert, so biegen sich die Lager 24' entsprechend durch, so daß ein Reibschluß zwischen dem Vorsprung 21 und dem Außenumfang der Umlenkrolle 22 bewirkt wird. Hierdurch wird die Drehbewegung der Umlenkrolle verlangsamt und schließlich vollständig angehalten. Bei nachlassender Gurtkraft bewegen sich die Lager 24' wieder elastisch in ihre Ausgangsstellung zurück, so daß sich die Umlenkrolle 22 frei um ihre Drehachse X drehen kann. Bei blockierter Umlenkrolle 22 bewegt sich das Gurtband 14 (vgl. Fig. 8) nicht in Richtung der Drehachse X der Umlenkrolle 22. Vielmehr gleitet das Gurtband frei und ungeklemmt über die blockierte Umlenkrolle, ohne daß eine Querbewegung auftritt.

Wie Fig. 2 ferner zeigt, ist etwa in der Mitte des Steges 17 ein Vorsprung 21 angeformt, der in Richtung der Umlenkrolle 22 weist und sich in Axialrichtung der Umlenkrolle 22 erstreckt. Am Außenumfang der Umlenkrolle 22' und etwa in deren Mitte sind über den Umfang verteilte Aussparungen 23 vorgesehen, die zu dem am Steg 17 angeformten Vorsprung 21 im wesentlichen komplementär ausgebildet sind. Bei einem normalen, das heißt belastungsfreien Abwickeln des Gurtbandes um die Umlenkrolle 22 tritt keine Berührung zwischen dem Vorsprung 21 und dem Außenumfang der zylindrischen Umlenkrolle 22 auf. Erhöht sich jedoch die Gurtkraft, das heißt die auf den Gurt aufgebrachte Zugkraft über einen bestimmten, voreingestellten Wert, so biegen sich die Lager 24' entsprechend durch, so daß der Vorsprung 21 in eine der Aussparungen 23 eingreift und dadurch die Umlenkrolle 22' vollständig blockiert. Da die Aussparungen 23 gleich-mäßig über den gesamten Umfang der Umlenkrolle 22' verteilt sind, ist bei Erreichen der vorbestimmten Gurtkraft ein rasches Eingreifen in einen der Vorsprünge 23 gewährleistet. Bei nachlassender Gurtkraft bewegen sich die Lager 24' wieder elastisch in ihre Ausgangsstellung zurück, so daß sich die Umlenkrolle 22 frei um ihre Drehachse X drehen kann. Bei blokkierter Umlenkrolle 22 bewegt sich das Gurtband 14 (vgl. Fig. 1) nicht in Richtung der Drehachse X der Umlenkrolle 22. Vielmehr gleitet das Gurtband über die blockierte Umlenkrolle, ohne daß eine Querbewegung auftritt.

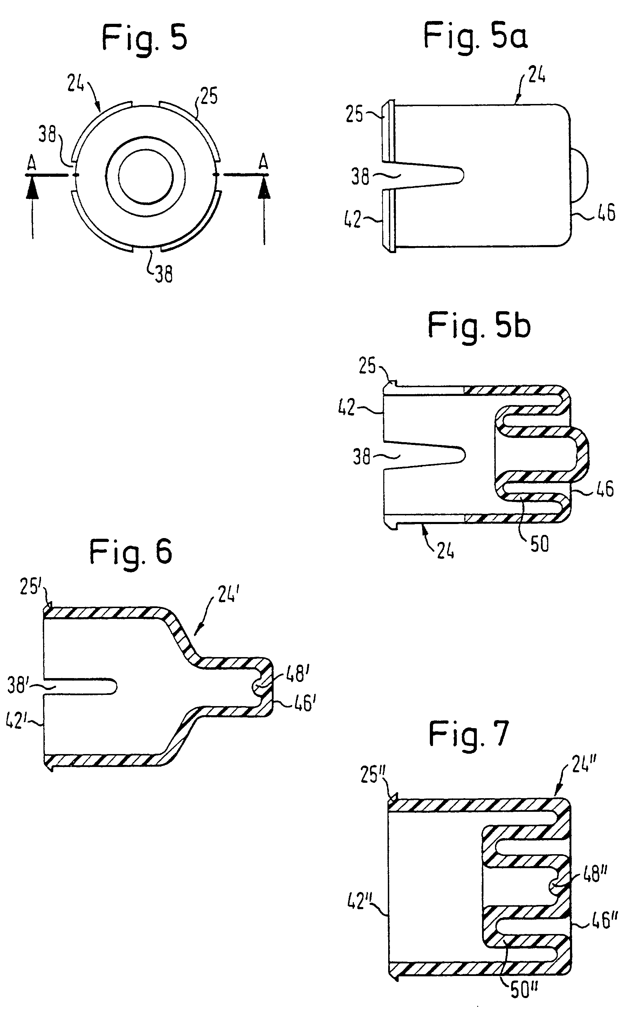

Das in Fig. 2 dargestellte Lager 24' entspricht der in Fig. 6 dargestellten Ausführungsform, die nachfolgend noch näher beschrieben wird.

Wie in Fig. 2 gut zu erkennen ist, dienen die oberhalb und zu beiden Seiten der Umlenkrolle vorgesehenen kreisförmigen Führungsöffnungen, die sich in Richtung des oberen Randes der Umlenkrolle öffnen, zum Führen des Gurtbandes, wenn dieses mit geringer Gurtkraft (beispielsweise beim Anlegen eines Gurtes) schräg abgezogen wird. Wie ferner gut zu erkennen ist, weist die Umlenkrolle 22' an ihren beiden Stirnseiten jeweils konkave Ausnehmungen 30 auf, die eine Berührung zwischen der Umlenkrolle 22' und den Lagern 24' verhindern. Das Lager 24' befindet sich bis zu einem verbreiterten Rand 25 in der Bohrung 18 und liegt dort mit der Außenfläche seines Bereiches mit größerem Durchmesser an der Innenwand der Bohrung 18 an.

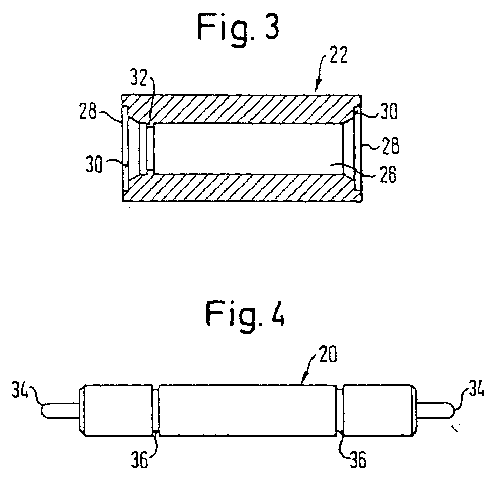

Fig. 3 zeigt einen Längsschnitt durch die in Fig. 1 dargestellte Umlenkrolle 22, die mit einer axialen Durchgangsbohrung 26 versehen ist. An den beiden Stirnseiten 28 der Umlenkrolle 22 sind gestufte Ausnehmungen 30 vorgesehen. Im Inneren der in Fig. 3 dargestellten Umlenkrolle 22 ist ein umlaufender Ringvorsprung 32 vorgesehen, der zum Aufrasten der Umlenkrolle 22 auf die Welle 20 dient.

Fig. 4 zeigt im Detail die in den Fig. 2 dargestellte Welle 20, deren Enden stiftartige Fortsätze mit konvex geformten Enden 34 aufweisen. Ferner weist die Welle 20 zwei umlaufende Ringnuten 36 auf, die zum Einrasten des Ringvorsprungs 32 der Umlenkrolle 22 dienen. Die stiftartigen Fortsätze der Welle 20 oder auch die gesamte Welle 20 können flexibel ausgebildet sein, um bei Erreichen einer bestimmten Gurtkraft ein elastisches und flexibles Durchbiegen der Welle bzw. der Wellenenden zu bewirken, so daß die auf der Welle befestigte Umlenkrolle mit dem Vorsprung 21 in Eingriff tritt.

Fig. 5 zeigt eine vergrößerte Vorderansicht und Fig. 5a eine vergrößerte Seitenansicht einer weiteren Ausführungsform eines Lagers 24. In Fig. 5b ist ein Längsschnitt durch dieses Lager dargestellt.

Wie diese Figuren zeigen, weist das Lager 24 eine hülsenartige Form auf und ist an seinem (in den Fig. 5a und 5b) linken Ende 42 offen und an dem gegenüberliegenden Ende 46 geschlossen ausgebildet. Am Außenumfang des offenen Endes 42 besitzt das Lager 24 einen verbreiterten Rand 25, der eine Auflaufschräge besitzt, damit das Lager in die Bohrung 18 der Halterung 10 eingesetzt werden kann.

Am offenen Ende 42 des Lagers 24 sind vier schlitzartige, in Axialrichtung verlaufende Aussparungen 38 vorgesehen, wobei jeweils zwei Aussparungen gegenüberliegend angeordnet sind. Die Aussparungen 38 sind konisch ausgebildet und erstrecken sich etwa über ein Drittel des Lagers.

Das Lager 24 ist grundsätzlich zylindrisch ausgebildet und weist zwei Bereiche mit unterschiedlichen Durchmessern auf, wobei sich der Bereich mit größerem Durchmesser über nahezu die gesamte Länge des Lagers 24 erstreckt. Der Bereich mit kleinerem Durchmesser befindet sich zum überwiegenden Teil innerhalb des Bereiches mit größerem Durchmesser und ist über eine im Querschnitt mäanderförmige Ausbildung 50 mit dem Bereich größeren Durchmessers verbunden.

Fig. 6 zeigt im Detail das in den Fig. 2 gezeigte Lager 24', bei dem ebenfalls ein Bereich mit größerem und ein Bereich mit kleinerem Durchmesser vorgesehen sind, wobei sich der Übergangsbereich konisch verjüngt und sich der Bereich mit kleinerem Durchmesser vollständig außerhalb des Bereiches mit größerem Durchmesser befindet, so daß im Querschnitt eine flaschenhalsartige Anordnung gegeben ist. An der Innenseite des geschlossenen Endes 46' ist eine konvexe Lagerfläche 48' angeordnet, die konzentrisch positioniert ist. Auch bei dieser Ausführungsform ist ein verbreiterter Rand 25' am offenen Ende 42' des Lagers 24' vorgesehen. Vom offenen Ende 42' verlaufen zwei Ausnehmungen 38', die im wesentlichen rechteckig ausgebildet sind, in Axialrichtung des Lagers. Auch bei dieser Ausführungsform beträgt der kleinere Durchmesser etwa 40% des größeren Durchmessers.

Fig. 7 zeigt die Querschnittsansicht einer weiteren Ausführungsform, die ähnlich zu der in den Fig. 5 bis 5b dargestellten ist. Bei dieser Ausführungsform ist das Lager 24" so ausgebildet, daß sich der Bereich mit geringerem Durchmesser vollständig innerhalb des Bereiches mit größerem Durchmesser befindet. An der inneren Stirnseite des geschlossenen Endes 46" ist mittig eine konvexe Lagerfläche 48" vorgesehen. Der Bereich mit geringerem Durchmesser erstreckt sich über etwa 50% der axialen Länge des Lagers 24".

Schließlich sei noch darauf hingewiesen, daß auch die Umlenkrolle 22, 22' selbst aus einem elastisch verformbaren Material hergestellt werden kann, so daß sich diese bei Überschreiten einer vorbestimmten Gurtkraft flexibel durchbiegt, um mit einer Bremsfläche in Eingriff zu treten.

## Patentansprüche

1. Sicherheitsgurtanordnung mit einer an einem Fahrzeugteil um eine Achse schwenkbar befestigbaren Halterung (10), die eine Umlenkrolle (22, 22') zwischen zwei Lagern (24, 24', 24") lagert, wobei im angelegten Zustand zumindest ein die Umlenkrolle teilweise umschlingender Bandteil (B) des Gurtbandes (14) schräg zur Drehachse der Umlenkrolle verläuft, und wobei eine Bremseinrichtung (21, 23) vorgesehen ist, die bei erhöhten Gurtkräften mit der Umlenkrolle (22, 22') in Eingriff tritt,
**dadurch gekennzeichnet,**
**dass** als Bremseinrichtung ein Vorsprung (21) vorgesehen ist, mit dem die Umlenkrolle (22, 22') in Eingriff bringbar ist, um eine Bremswirkung zu erzielen.

2. Sicherheitsgurtanordnung nach Anspruch 1,
**dadurch gekennzeichnet,**
**daß** ein Lager (24, 24', 24") eine hülsenartige Form aufweist und an einem Ende (42, 42', 42") offen und an einem gegenüberliegenden Ende (46, 46', 46") geschlossen ist.

3. Sicherheitsgurtanordnung nach Anspruch 2,
**dadurch gekennzeichnet,**
**daß** das Lager (24, 24', 24") am Außenumfang des offenen Endes (42) verbreitert ist.

4. Sicherheitsgurtanordnung nach Anspruch 2 oder 3,
**dadurch gekennzeichnet,**
**daß** das Lager (24, 24') an dem offenen Ende (42, 42') schlitzartige, in Axialrichtung verlaufende Aussparungen (38, 38') aufweist.

5. Sicherheitsgurtanordnung nach zumindest einem der vorhergehenden Ansprüche,
**dadurch gekennzeichnet,**
**daß** ein Lager (24, 24', 24") in eine Durchbrechung der Halterung (10) eingebracht ist, die vorzugsweise als Durchgangsbohrung (18) ausgeführt ist.

6. Sicherheitsgurtanordnung nach zumindest einem der vorhergehenden Ansprüche 2 bis 5,
**dadurch gekennzeichnet,**
**daß** das Lager (24', 24") am geschlossenen Ende (46', 46") und im Inneren eine konvexe Lagerfläche (48', 48") aufweist.

7. Sicherheitsgurtanordnung nach zumindest einem der vorhergehenden Ansprüche,
**dadurch gekennzeichnet,**
**daß** die Bremseinrichtung zumindest eine an der Umlenkrolle (22') vorgesehene Vertiefung (23) aufweist.

8. Sicherheitsgurtanordnung nach Anspruch 7,
**dadurch gekennzeichnet,**
**daß** Vertiefung (23) und Vorsprung (21) im wesentlichen komplementär ausgebildet sind.

9. Sicherheitsgurtanordnung nach Anspruch 7,
**dadurch gekennzeichnet,**
**daß** über den Umfang der Umlenkrolle (22') mehrere Vertiefungen (23) gleichmäßig verteilt angeordnet sind.

## Claims

1. Safety belt arrangement with a holder (10) fixable on a vehicle part to swivel about an axis and supporting a guide roller (22, 22') between two bearings (24, 24', 24'') wherein when in the active position at least one part (B) of the belt (14) which runs partially round the guide roller runs at an angle to the axis of rotation of the guide roller, and wherein a brake device (21, 23) is provided which moves into engagement with the guide roller (22, 22') when the belt forces are intensified,
**characterised in that**
the brake device is formed by substantially complementary inter-engaging means (21, 23) on the guide roller (22, 22') and on the holder.

2. Safety belt arrangement according to claim 1,
**characterised in that**
a bearing (24, 24', 24") has a sleeve-like shape and is open at one end (42, 42', 42'') and closed at the opposite end (46, 46', 46'').

3. Safety belt arrangement according to claim 2,
**characterised in that**
the bearing (24, 24', 24") widens out on the outer circumference of the open end (42).

4. Safety belt arrangement according to claim 2 or 3,
**characterised in that**
the bearing (24, 24') has at the open end (42, 42') slit-like recesses (38, 38') running in the axial direction.

5. Safety belt arrangement according to at least one of the preceding claims,
**characterised in that**
a bearing (24, 24', 24'') is inserted in an aperture of the holder (10) which is preferably designed as a through bore (18).

6. Safety belt arrangement according to at least one of the preceding claims 2 to 5,
**characterised in that**
the bearing (24', 24'') has a convex bearing surface (48', 48'') on the inside at the closed end (46', 46'').

7. Safety belt arrangement according to at least one of the preceding claims,
**characterised in that**
the substantially complementary designed means have at least one projection (21) provided on the holder (10).

8. Safety belt arrangement according to at least one of the preceding claims,
**characterised in that**
the substantially complementary designed means have at least one indentation (23) provided on the guide roller (22').

9. Safety belt arrangement according to claim 8,
**characterised in that**
several indentations (23) are provided uniformly distributed over the circumference of the guide roller (22').

## Revendications

1. Dispositif de ceinture de sécurité avec une attache (10) pouvant être fixée de façon orientable autour d'un axe sur une partie de véhicule, attache qui renferme un galet de renvoi (22,22') entre deux paliers (24,24',24"), moyennant quoi à l'état bouclé au moine un élément (B) de la ceinture (14) entourant partiellement le galet de renvoi s'étend obliquement par rapport à l'axe de rotation du galet de renvoi, et un dispositif de frein (21,23) étant prévu qui, en cas de forces de ceinture accrues, entre en action avec le galet de renvoi (22,22'),
***caractérisé en ce que**,*
comme dispositif de frein il est prévu une saillie (21) avec laquelle le galet de renvoi (22,22') peut entrer en action afin d'exercer un effet de freinage.

2. Dispositif de ceinture de sécurité selon la revendication 1,
***caractérisé en ce que**,*
un palier (24,24',24") présente une forme de douille et il est fermé sur une extrémité (42,42',42") et ouvert sur une extrémité opposée (46,46',46").

3. Dispositif de ceinture de sécurité selon la revendication 2,
***caractérisé en ce que**,*
le palier (24,24',24") est élargi sur la périphérie extérieure de l'extrémité ouverte (42).

4. Dispositif de ceinture de sécurité selon la revendication 2 ou 3,
***caractérisé en ce que**,*
sur l'extrémité ouverte (42,42'), le palier (24,24') présente des évidements (38,38") en forme de fente, s'étendant dans la direction axiale.

5. Dispositif de ceinture de sécurité selon au moins l'une des revendications précédentes,
**caractérisé en ce que**,
un palier (24,24',24") est monté dans un passage traversant de l'attache (10), passage qui, de préférence, est conçu comme alésage traversant (18).

6. Dispositif de ceinture de sécurité selon au moins l'une des revendications 2 à 5,
***caractérisé en ce que**,*
le palier (24',24") présente une face de roulement convexe (48',48") sur l'extrémité fermée (46',46") et à l'intérieur.

7. Dispositif de ceinture de sécurité selon au moins l'une des revendications précédentes,
**caractérisé en ce que**,
le dispositif de freinage présente au moins une dépression (23) prévue sur le galet de renvoi (22').

8. Dispositif de ceinture de sécurité selon la revendication 7,
***caractérisé en ce que**,*
la dépression (23) et la saillie (21) sont conçues de façon sensiblement complémentaire.

9. Dispositif de ceinture de sécurité selon la revendication 7,
***caractérisé en ce que**,*
sur la périphérie du galet de renvoi (22') sont agencées plusieurs dépressions (23) réparties uniformément.
